(19) **Europäisches Patentamt**
**European Patent Office**
**Office européen des brevets**

(11) **EP 4 564 700 A1**

(12) **EUROPEAN PATENT APPLICATION**

(43) Date of publication:
**04.06.2025 Bulletin 2025/23**

(21) Application number: **24200247.5**

(22) Date of filing: **13.09.2024**

(51) International Patent Classification (IPC):
**H04B 7/06** (2006.01)   **H04B 17/318** (2015.01)
**H04B 7/0404** (2017.01)

(52) Cooperative Patent Classification (CPC):
**H04B 7/06952; H04B 17/328; H04B 7/0404**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.11.2023 GB 202318106**

(71) Applicant: **Nokia Technologies Oy
02610 Espoo (FI)**

(72) Inventors:
- **REZAIE, Sajad
9220 Aalborg (DK)**
- **BARBU, Oana-Elena
9220 Aalborg (DK)**
- **NAVARRO, Carles
9000 Aalborg (DK)**
- **FERNANDES, Filipa
9000 Aalborg (DK)**

(74) Representative: **Auger, Hannah Maria et al
Venner Shipley LLP
200 Aldersgate Street
London EC1A 4HD (GB)**

(54) **BEAM MANAGEMENT**

(57)     There is herein disclosed an apparatus comprising means for determining a first orientation of the apparatus at a first time instance. The apparatus further comprise means for receiving, at substantially the first time instance, a reference signal from a network node and means for determining a reference signal received power, RSRP, value of the reference signal. The apparatus further comprise means for determining a second orientation of the apparatus at a second time instance and the second time instance is later than the first time instance. The apparatus further comprise means for determining a difference metric between the first orientation and second orientation and means for, upon determining that the difference metric is greater than a predetermined threshold value, processing the RSRP value, based on the difference metric, to provide a refined RSRP value.

FIG. 12

EP 4 564 700 A1

**Description**

**Field**

Example embodiments may relate to an apparatus, method and/or computer program for beam management, in particular, for rotating user devices.

**Background**

Communication systems enable communication between two or more nodes or devices, such as fixed or mobile communication devices. Signals can be carried on wireless carriers.

An example of a cellular communication system is an architecture that is being standardized by the 3rd Generation Partnership Project (3GPP). There has been development in this field often referred to as the long-term evolution (LTE) (sometimes referred to as 4G) of the Universal Mobile Telecommunications System (UMTS) radio-access technology (sometimes referred to as 3G). E-UTRA (evolved UMTS Terrestrial Radio Access) is the air interface of 3GPP's Long Term Evolution (LTE) upgrade path for mobile networks. In LTE, base stations, network nodes or access points, which are referred to as enhanced Node AP or Evolved Node B (eNBs), provide wireless access within a coverage area or cell. In LTE, mobile devices, or mobile stations are referred to as user equipment's (UE). LTE has included a number of improvements or developments.

5G New Radio (NR) development is part of a continued mobile broadband evolution process to meet the requirements of 5G, similar to earlier evolution of 3G & 4G wireless networks. In addition, 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT), and may offer new types of mission-critical services. Ultra-reliable and low-latency communications (URLLC) devices may require high reliability and very low latency.

A standardized set of operations for supporting beamforming transmission, including beam sweeping, beam measurements and reporting, beam maintenance and recovery is provided for 5G NR technology.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.

In a first aspect, there is herein provided an apparatus comprising means for determining a first orientation of the apparatus at a first time instance. The apparatus further comprise means for receiving, at substantially the first time instance, a reference signal from a network node and means for determining a reference signal received power, RSRP, value of the reference signal. The apparatus further comprise means for determining a second orientation of the apparatus at a second time instance and the second time instance is later than the first time instance. The apparatus further comprise means for determining a difference metric between the first orientation and second orientation and means for, upon determining that the difference metric is greater than a predetermined threshold value, processing the RSRP value, based on the difference metric, to provide a refined RSRP value.

In some embodiments, the apparatus further comprises means for commencing a wireless communication session with the network node, based on the refined RSRP value.

In some embodiments, the apparatus further comprises means for determining that a rotation of the apparatus has occurred.

In some embodiments, the first orientation and second orientation are determined per a synchronization signal block, SSB, measurement or a synchronisation signal burst, SS-burst, time instance.

In some embodiments, the difference metric comprises a distance between the first orientation and the second orientation.

In some embodiments, the difference metric comprises a factor to account for angle wrapping at a coordinate system used to calculate the distance.

In some embodiments, the apparatus further comprises means for mapping the RSRP value to a representation of the RSRP value in a directional space.

In some embodiments, the apparatus further comprises means for calculating a rotation angle of the apparatus. The rotation angle is calculated as a distance between the first orientation and the second orientation and means for rotating the representation of the RSRP value by the rotation angle to produce a refined RSRP value.

In some embodiments, the apparatus further comprises means for obtaining a plurality of refined RSRP values for a plurality of reference signals and means for combining the plurality of refined RSRP values to produce an aggregated representation in the directional space.

In some embodiments, the apparatus further comprises means for determining an optimum user equipment, UE, beam from the aggregated representation. The optimum UE beam is determined based on a strength associated with the aggregated representation in the directional space.

In some embodiments, the apparatus further comprises means for commencing a wireless communication session with the network node, based on the optimum UE beam.

In some embodiments, the apparatus comprises a user equipment, UE.

In some embodiments, the means comprise: at least one processor; and at least one memory storing instructions that, when executed by the at least one processor, cause the performance of the apparatus.

In a second aspect, there is herein provided an apparatus comprising means for determining a first orientation of the apparatus at a first time instance. The apparatus further comprises means for receiving, at substantially the first time instance, a reference signal from a network node and means for determining a reference signal received power, RSRP, value of the reference signal. The apparatus further comprises means for determining a second orientation of the apparatus at a second time instance. The second time instance is later than the first time instance. The apparatus further comprises means for mapping the RSRP value to a representation of the RSRP value in a directional space and means for calculating a rotation angle of the apparatus. The rotation angle is calculated as a distance between the first orientation and the second orientation. The apparatus further comprises means for rotating the representation of the RSRP value by the rotation angle to produce a refined RSRP value.

In some embodiments, the apparatus further comprises means for obtaining a plurality of refined RSRP values for a plurality of reference signals and means for combining the plurality of refined RSRP values to produce an aggregated representation in the directional space.

In some embodiments, the apparatus further comprises means for determining an optimum user equipment, UE, beam from the aggregated representation. The optimum UE beam is determined based on a strength associated with the aggregated representation in the directional space.

In some embodiments, the apparatus further comprises means for commencing a wireless communication session with the network node, based on the optimum UE beam.

In some embodiments, the apparatus comprises a user equipment, UE.

In some embodiments, the means comprise: at least one processor; and at least one memory storing instructions that, when executed by the at least one processor, cause the performance of the apparatus.

According to a third aspect, there is herein provided a method comprising determining a first orientation of an apparatus at a first time instance and receiving, at substantially the first time instance, a reference signal from a network node. The method further comprises determining a reference signal received power, RSRP, of the reference signal and determining a second orientation of the apparatus at a second time instance. The second time instance is later than the first time instance. The method further comprises determining a difference metric between the first orientation and second orientation and upon determining that the difference metric is greater than a predetermined threshold value, processing the RSRP, based on the difference metric, to provide a refined RSRP.

According to a fourth aspect, there is herein provided a method comprising determining a first orientation of an apparatus at a first time instance and receiving, at substantially the first time instance, a reference signal from a network node. The method further comprises determining a reference signal received power, RSRP, value of the reference signal and determining a second orientation of the apparatus at a second time instance. The second time instance is later than the first time instance. The method further comprises mapping the RSRP value to a representation of the RSRP value in a directional space and calculating a rotation angle of the apparatus, wherein the rotation angle is calculated as a distance between the first orientation and the second orientation. The method further comprises rotating the representation of the RSRP value by the rotation angle to produce a refined RSRP value.

According to a fifth aspect there is provided an apparatus comprising at least one processor and at least one memory storing instructions that, when executed by the at least one processor, cause the apparatus to perform (at least) any method as described herein (including the method of the third aspect or the method of the fourth aspect described above).

According to a sixth aspect, there is provided a computer program product comprising a set of instructions which, when executed on an apparatus, is configured to cause the apparatus to carry out the method of any preceding method definition.

According to a seventh aspect, there is provided a non-transitory computer readable medium comprising program instructions stored thereon for performing a method, comprising determining a first orientation of an apparatus at a first time instance and receiving, at substantially the first time instance, a reference signal from a network node. The method further comprises determining a reference signal received power, RSRP, of the reference signal and determining a second orientation of the apparatus at a second time instance. The second time instance is later than the first time instance. The method further comprises determining a difference metric between the first orientation and second orientation and upon determining that the difference metric is greater than a predetermined threshold value, processing the RSRP, based on the difference metric, to provide a refined RSRP.

According to a eight aspect, there is provided a non-transitory computer readable medium comprising determining a first orientation of an apparatus at a first time instance and receiving, at substantially the first time instance, a reference signal from a network node. The method further comprises determining a reference signal received power, RSRP, value of the reference signal and determining a second orientation of the apparatus at a second time instance. The second time instance is later than the first time instance. The method further comprises mapping the RSRP value to a representation of the RSRP value in a directional space and calculating a rotation angle of the apparatus, wherein the rotation angle is calculated as a distance between the first orientation and the second orientation. The method further comprises rotating the representation of the RSRP value by the rotation angle to produce a refined RSRP value.

It will be seen that some embodiments provide a beam management procedure for use during user equipment rotation.

## Brief Description of the Drawings

Example embodiments will now be described by way of non-limiting example, with reference to the accompanying drawings, in which:

FIG. 1 shows, by way of example, a network architecture of a communication system.
FIG. 2 shows, by way of example, a synchronisation signal and synchronisation signal block.
FIG. 3 shows, by way of example, a rotating user equipment, UE.
FIG. 4 shows, by way of example, a method.
FIG. 5 shows, by way of example, a flow chart of a decision making process.
FIG. 6 shows, by way of example, a method.
FIGS. 7A-7C show, by way of example, UE beam codebooks in 2D.
FIGS. 8A and 8B show, by way of example, UE beam codebooks in 3D.
FIG. 9A shows, by way of example, reference signal receive power for four UE beams and FIG. 9B shows, by way of example, a UE measurement representation of the four beams.
FIGS. 10A-10D show, by way of example, four refinement representations of a UE measurement representation.
FIGS. 11A and 11B show, by way of example, aggregated measurement representations.
FIG. 12 shows, by way of example, a flow chart of a decision making process.
FIG. 13 shows, by way of example, a block diagram of an apparatus.

## Detailed Description

Example embodiments may relate to an apparatus, method and/or computer program for beam management.

In a case where a client device, such as a user equipment (UE) is rotating, measurements of reference signal received power (RSRP) may quickly become outdated or require refinement to reflect the rotation of the UE.

Example embodiments relate to an apparatus, method and/or computer program in which a UE may determine an RSRP value at a first time instance and determine whether to adjust this RSRP value based on a determined change in orientation of the UE. Example embodiments also relate to an apparatus, method and/or computer program in which a UE may determine a refined RSRP value based on a determined rotation angle between the UE at a first orientation and a second orientation.

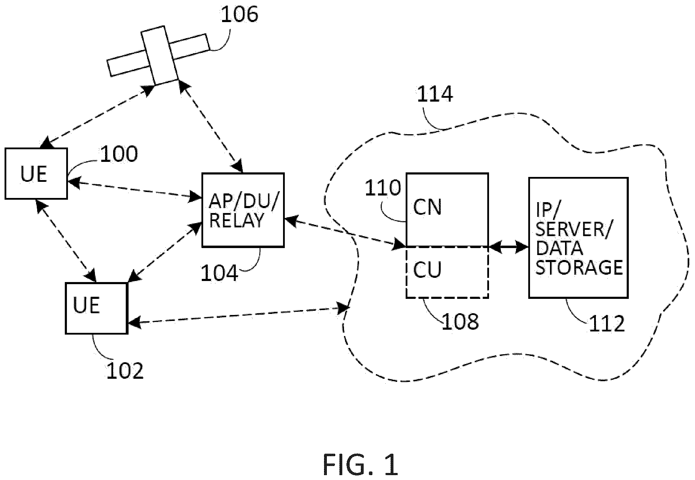

FIG. 1 shows, by way of an example, a network architecture of a communication system which is a radio access network (RAN). In the following, different exemplifying embodiments will be described using, as an example of an access architecture to which embodiments may be applied, a radio access architecture based on long term evolution advanced (LTE Advanced, LTE-A) or new radio (NR), also known as fifth generation (5G), without restricting the embodiments to such an architecture, however. Embodiments may also be applied to other kinds of communications networks having suitable means by adjusting parameters and procedures appropriately. Some examples of other options for suitable systems are the universal mobile telecommunications system = radio access network, long term evolution (LTE), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

FIG. 1 shows first and second user devices (which may be interchangeably referred to as user equipment's, UEs) 100, 102 configured to be in a wireless connection on one or more communication channels in a cell with a network node, such as a base station (denoted gNB) 104 providing a cell. The physical link from a user device, e.g. the first user device 100, to the network node 104 is called the uplink (UL) or reverse link and the physical link from the network node to the user device is called the downlink (DL) or forward link. It should be appreciated that network nodes and their functionalities may be implemented by using any node, host, server or access point entity suitable for such a usage. A communications system typically comprises more than one network node in which case the network nodes may also be configured to communicate with one another over links, wired or wireless, designed for the purpose. These links may be used for signaling purposes. A network node is a computing device configured to control the radio resources of the communication system it is coupled to. A network node may also be referred to as a TRP, base station (BS), an access point or any other type of interfacing device including a relay station capable of operating in a wireless environment. A network node may include or is coupled to transceivers. From the transceivers of the network node 104, a connection may be provided to an antenna unit that establishes bidirectional radio links to user devices, such as the first and second user devices 100, 102. The antenna unit may comprise a plurality of antennas or antenna elements, for example arranged as an antenna array. The network node 104 may further be connected to a core network 110.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant, handset, device using a wireless modem (alarm or measurement device, etc.), laptop and/or touch screen computer, tablet, game console, notebook, a vehicle, fixed wireless access (FWA) and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

5G enables using multiple input and multiple output (MIMO) technology at both the UE and gNB side. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

An edge cloud may be brought into radio access networks (RANs). Using an edge cloud may mean access node operations to be carried out, at least partly, in a server, host or node operationally coupled to a remote radio head or base station comprising radio parts. It is also possible that node operations will be distributed among a plurality of servers, nodes or hosts. Applications of cloud RAN architecture enables RAN real time functions being carried out at the RAN side (in a distributed unit, DU 104) and non-real time functions being carried out in a centralized manner (in a centralized unit, CU 108).

In a multi-TRP scenario, a UE is able to connect to multiple transmission reception points (TRPs). Beam management is applied during a random access channel (RACH) procedure, when the UE forms the initial connection with the network, and while the UE is in a connected state. In a connected state, transmitting beams and receiving beams may be refined.

Beam management may define a set of functionalities to assist the UE to set its reception (Rx) and transmission (Tx) beams for DL receptions and UL transmissions, respectively. The functionalities can be categorized roughly according to four groups as follows:

In beam indication, the UE is assisted to set its Rx and Tx beam properly for the reception of the DL and the transmission of the UL, respectively.

Beam acquisition, measurements and reporting refer to procedures for providing the gNB knowledge about feasible DL and UL beams for the UE.

Beam recovery refers to rapid link reconfiguration against sudden blockages, e.g. fast re-alignment of gNB and UE beams.

Beam tracking and refinement refer to procedures for measuring and aligning gNB and UE side beams, as well as to refine gNB and UE side beams.

A gNB broadcasts reference signals in all beams and/or directions at regular intervals. The broadcasting allows a UE to be synchronized with the gNB and read the synchronization signal block (SSB). A SSB includes:

- Primary synchronization signal (PSS): The received PSS is one of the three possible/preconfigured sequences, and it provides the timing estimate,

- Secondary synchronization signal (SSS): The received SSS can be one of 336 possible/preconfigured sequences,
- Physical broadcast channel (PBCH) and demodulation reference signal (DMRS).

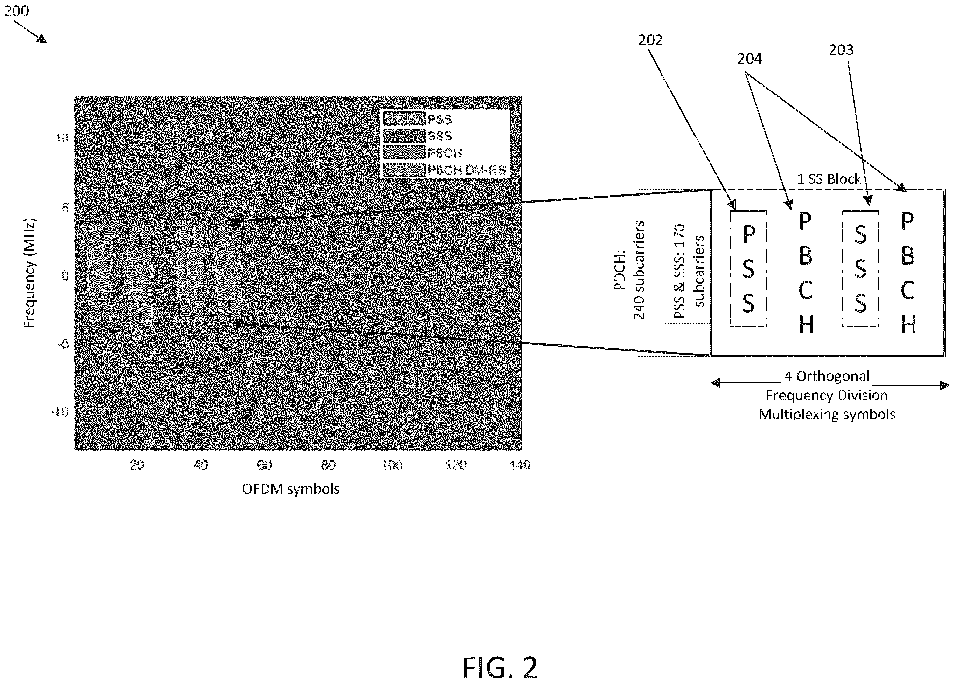

FIG. 2 demonstrates, by way of example, a representation 200 of an SS burst block pattern in 5G NR, the SS burst including multiple synchronisation signal blocks each including PSS 202, SSS 203, PBCH and DMRS 204 for four orthogonal frequency division multiplexing (OFDM) symbols.

Beam management includes a set of procedures to find and update an optimal beam pair for establishing/keeping a link. Beam management has evolved in Rel-16 and successively in Rel-17 to support more advanced configurations such as multi beams reporting to enable multi-TRPs and multi-panel configurations. However, a problem of known beam management procedures is that, with a larger number of beams supported by high-dimensional MIMO (multiple-input, multiple-output) arrays, Channel Status Information Reference Signal (CSI-RS) measurements and feedback overhead radically increase to enable beam selection. In addition, the time required for the gNB and UE to complete the beam sweeping and establish the best beam increases accordingly, thus limiting the support of low latency communication. This is mainly due to the frequency of SSB and/or CSI-RS transmission during procedures P1, P2, P3 that are described in 3GPP TR 38.802 and summarized as follows:

P1 provides beam sweeping implemented for the gNB to scan the coverage area by periodically transmitting SSBs with wide angular beams. At the UE side, the UE scans different SSBs to identify the best beam and corresponding time and/or frequency resources on which to request access. P1 may be used to enable UE measurement on different TRP Tx beams to support selection of TRP Tx beams/UE Rx beam(s). For beamforming at a TRP, it typically includes an intra/inter-TRP Tx beam sweep from a set of different beams. For beamforming at a UE, it typically includes a UE Rx beam sweep from a set of different beams.

During P2, the gNB performs beam refinement transmitting CSI-RSs with narrow beams to identify a more precise direction towards the UE after establishing the wide beam in P1. P2 may used to enable UE measurement on different TRP Tx beams to possibly change inter/intra-TRP Tx beam(s). Measurements may be performed from a possibly smaller set of beams for beam refinement than in P1. P2 may be a special case of P1.

During P3, beam refinement is implemented at the UE side to scan a set of Rx narrow beams while the gNB transmits CSI-RSs using the best beam identified in P2. P3 may be used to enable UE measurement on the same TRP Tx beam to change a UE Rx beam in the case UE uses beamforming.

The procedures P1, P2 and P3 are executed sequentially to establish the data transmission between gNB and UE and, in case of beam failure and recovery, are fully repeated. In addition, P2 and P3 are also periodically repeated for beam maintenance. An SS burst can have up to 8 and 64 consecutive SSBs in FR 1 and FR 2 (mmWave), respectively.

Beam codebooks are usually designed to cover all the directions surrounding a device with at least one of the beams in the beam codebook. Thus, a search over all the beams in the UE codebook may provide a full view of the strong paths towards the device.

5G-NR allows SS-burst periodicity of 5, 10, 20, 40, 80, 160 ms. Present 5G-NR standards mention that a UE can assume a SSB is broadcasted every 20 ms, however, larger SS-burst periodicities (40, 80, 160 ms) can be considered for other purposes such as secondary carrier component. Furthermore, to improve energy efficiency and power saving aspect of cells in beyond 5G systems, larger SS-burst periodicity may be considered even for primary carrier component. Furthermore, to measure RSRPs for a UE beam with all the gNB beams, an SS-burst is needed. As a result, the P1 procedure time scales with the UE codebook size.

Therefore, the duration of the beam sweeping procedure increases with both SS-burst periodicity and the number of UE beams considered. Thus, for a fast-rotating UE, the measured signal strength with some of the codebook beams may result in outdated information. As such, potential UE rotation during beam management procedure (like during P1) may result in outdating the previously measured RSRPs i.e., by the time P2 is initiated, the UE rotation would have rendered the P1 RSRP measurements outdated. This may result in non-optimal beam predictions when uninformative sensor readings are collected over time. The computational complexity of a method to rectify such an issues is high as an accurate beam selection outcome requires significant computing power.

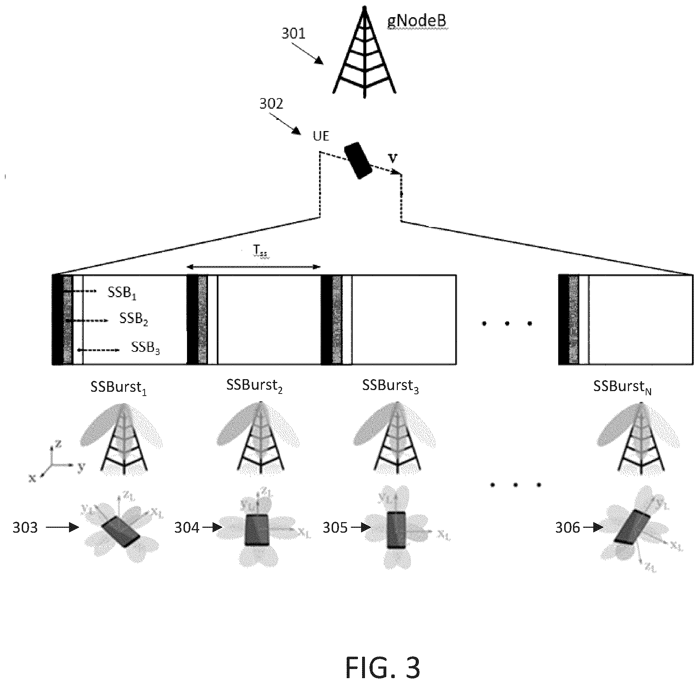

The present disclosure aims to refine outdated beam measurements due to UE rotation with an acceptable computational complexity at the UE side. For reference, FIG. 3 shows an example network architecture 300 include a gNB 301 and rotating UE 302. Whilst transmission from the gNB 301 may remain constant, received directional RSRP measurements at the UE 302 will change according to the angle of UE 302 relative to the gNB 301 as it rotates. Representations 303-306 reflect the changing angle of the user device as it is rotated. The disclosure provided herein uses just a few closed form equations (during a beam refinement procedure) to account for the device rotation during beam sweeping phase and adjusts the beam alignment outcome. This thereby produces a computationally efficient method of accounting for UE rotation.

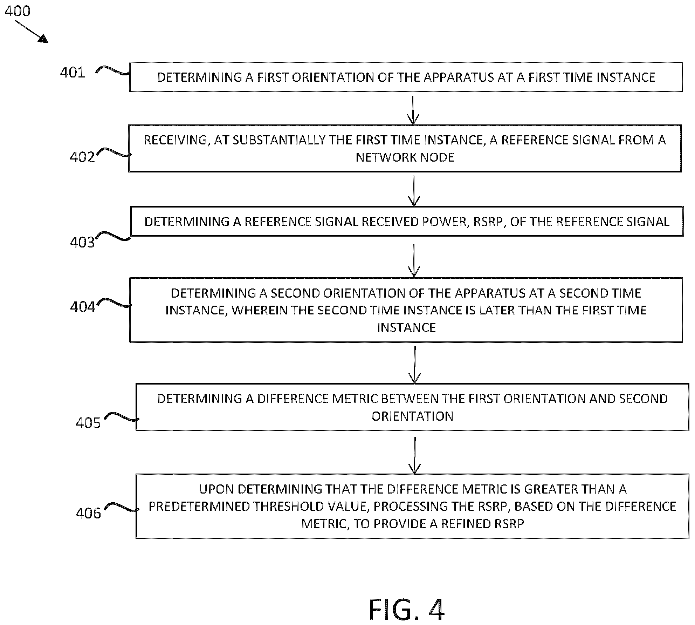

FIG. 4 shows, by way of example, a flowchart of a method 400 according to example embodiments. Each element of the flowchart may comprise one or more operations.

The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 400 is performed by an apparatus. The apparatus may be a user equipment according to the disclosure herein.

The method 400 may comprise a first operation 401 of determining a first orientation of an apparatus at a first time instance. The first operation may comprise determining and storing the first orientation at the apparatus. The first orientation may be determined via the use of a gyroscope or magnetometer. Determining the first orientation may comprise determining the location of the apparatus in three-dimensional Euclidean space and a set of vectors may be determined to represent the orientation of the apparatus. The first orientation may be stored alongside the first time instance at which the first orientation was determined.

The method 400 may comprise a second operation 402 of receiving, at substantially the first time instance, a reference signal from a network node. This may form part of the P1 procedure as the network node broadcast SSBs over a set of predefined directions and are received at the apparatus.

The receipt of the reference signal from the network node may trigger the determination of the first orientation at the first time instance. Ideally, the reference signal is received at exactly the same instance as the first orientation is determined, although it may be possible that the reference signal is received shortly before or after the determination of the first orientation. In any case, a measurement of a first orientation at a first time instance is associated with the received reference signal. The apparatus may already be synchronised with the network node such that it knows when to expect to receive the reference signal.

The method 400 may comprises a third operation 403 of determining an RSRP value of the reference signal.

For each beam in a UE codebook, the apparatus may measure and store the received RSRP for all the SSBs in SS burst. For each SSB or SS burst measurement period, the apparatus measures and stores the apparatus orientation. In this way, the first orientation is determined per a synchronization signal block, SSB, measurement or a synchronization signal burst, SS-burst, time instance.

The method 400 may comprise a fourth operation 404 of determining a second orientation of the apparatus at a second time instance, wherein the second time instance is later than the first time instance. After a rotation of the apparatus the second orientation measurement can be taken. As such, the apparatus now knows the orientation of the apparatus both before and after a rotation of the apparatus.

In some embodiments, the method 400 may further comprise determining that a rotation of the apparatus has occurred. The apparatus may be triggered to determine the second orientation based on the determination that the apparatus has been rotated.

The method 400 may further comprise a fifth operation 405 of determining a difference metric between the first orientation and second orientation. The difference metric may comprise a distance between the first orientation and the second orientation.

The method 400 may further comprise a sixth operation 606 of, upon determining that the difference metric is greater than a predetermined threshold value, processing the RSRP, based on the difference metric, to provide a refined RSRP.

In some embodiments, the method 400 may further comprise commencing a wireless communication session with the network node, based on the refined RSRP value. For example, a beam may be selected from a UE codebook based on the refined RSRP value as the beam may be determined as an optimum beam.

In one embodiment, the apparatus calculates the distance between the device orientation at the first time instance with the device orientation at the second time instance. If the distance is above a threshold value (TH), the apparatus may initiate a beam measurement refinement procedure. The beam measurement refinement procedure includes processing the RSRP value determined in the third operation 403.

For example, a distance metric $D^{(n)}$ can be defined as:

$$D^{(n)} = \arccos\left(\frac{O^{(n)}.O^{(D)}}{\|O^{(n)}\|\,\|O^{(D)}\|}\right) \qquad (1)$$

Alternatively, cosine distance metric $D^{(n)}$ can be defined as:

$$D^{(n)} = 1 - \frac{O^{(n)}.O^{(D)}}{\|O^{(n)}\|\,\|O^{(D)}\|} \qquad (2)$$

where $O^{(n)}$ is the first orientation at the first time instance the determined RSRP value and $O^{(D)}$ is the device orientation at the second time instance. Note that the above metrics are defined considering $O^{(n)}$ and $O^{(D)}$ as the vectors describing the device's orientation in Cartesian coordinates.

The difference metric (and, by extension, distance metric) may optionally comprise a factor to account for angle wrapping. The angle wrapping factor may be different according to the co-ordinate system.

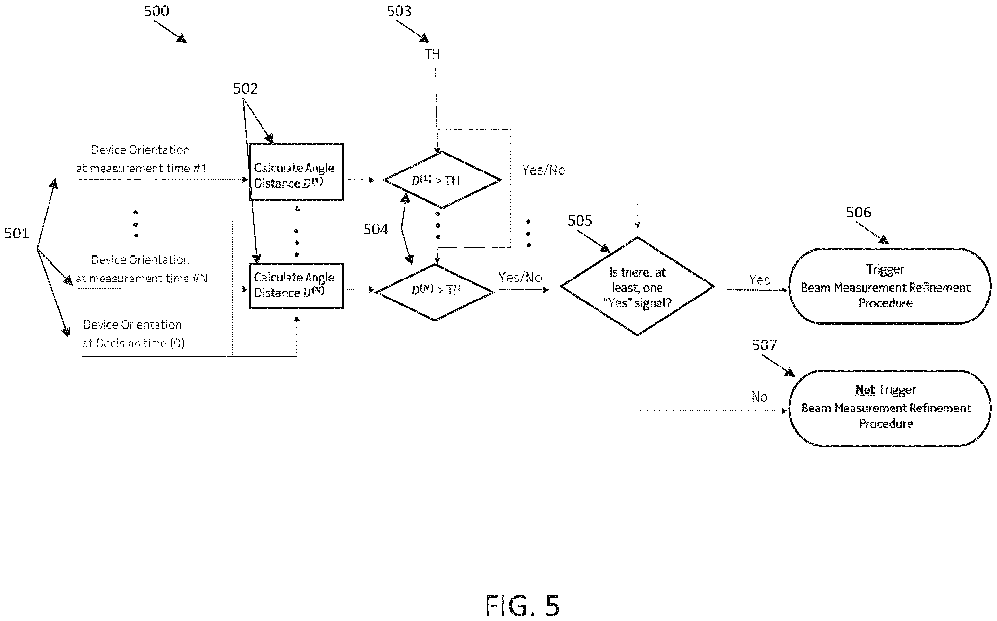

FIG. 5 shows a block diagram of the process to determine whether the difference metric is greater than a predetermined threshold value and therefore whether to trigger the beam measurement refinement procedure. Firstly, at step 501 multiple device orientations are determined (e.g. the first orientation at the first time instance and the second orientation at the second time instance). Then at step 502 the distance metric $D^{(n)}$ is calculated, for example, according to equations (1) or (2) above.

At step 503 a predetermined TH value is determined. The TH value may vary depending on system parameters and available computing resources. For example, if UE is in "low power mode", then the TH may be increased such that the beam refinement procedure is triggered less frequently. Also, if UE considers another beam codebook or different network node, the TH may change.

At step 504, it is determined whether the distance metric $D^{(n)}$ is greater than the predetermined TH. If the distance metric $D^{(n)}$ is greater than the predetermined TH for at least one reference signal (see step 505), then the beam measurement refinement procedure is triggered at step 506. Alternatively, the distance metric $D^{(n)}$ is not greater than the predetermined TH for any of the reference signals (see step 505) then the beam measurement refinement procedure is not triggered at step 507.

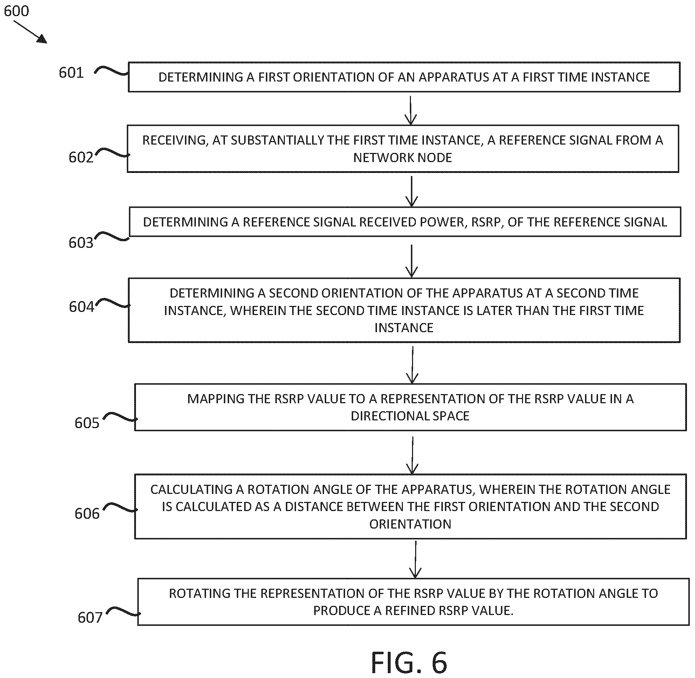

FIG. 6 shows, by way of example, a flowchart of a method 600 according to example embodiments. The method 600 of FIG. 6 relates to the steps involved in a beam measurement refinement procedure. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method is performed by an apparatus. The apparatus may be a user equipment according to the disclosure herein.

The method 600 may comprise a first to fourth operations i.e. 601-604 which correspond to the first to fourth operations shown in the method 400 of FIG. 4.

The method 600 may comprise a fifth operation 605 of mapping the RSRP value to a representation of the RSRP value in a directional space. The 'mapping' procedure is further discussed herein.

The method 600 may comprise a sixth operation 606 of calculating a rotation angle of the apparatus. The rotation angle is calculated as a distance between the first orientation and the second orientation.

The method 600 may comprise a seventh operation 607 of rotating the representation of the RSRP value by the rotation angle to produce a refined RSRP value. The rotation procedure for producing a refined RSRP value is further discussed herein.

In some embodiments, the method 600 optionally comprises obtaining a plurality of refined RSRP values for a plurality of reference signals and combining the plurality of refined RSRP values to produce an aggregated representation in the directional space.

In some embodiments, the method 600 optionally comprises determining an optimum user equipment, UE, beam from the aggregated representation. The optimum UE beam may be determined based on a strength associated with the aggregated representation in the directional space. The strength may be a strength associated with the refined RSRP values. As such, a beam associated with a highest refined RSRP value may be selected as the optimum UE beam.

In some embodiments, the method 600 optionally comprises commencing a wireless communication session with the network node, based on the optimum UE beam.

Mapping

The fifth operation 605 of method 600 comprises mapping a determined RSRP value to a representation of the RSRP value in a directional space. 'Mapping' may also herein be referred to as 'transforming'.

To map the beam measurements to a direction domain, a grid of discretized angles and directions can be used. For example, uniform sampling in azimuth and elevation angular space is a choice for definition of the grid of directions. Alternatively, a Fibonacci grid can be considered to guarantee uniform sampling in 3D sphere surrounding of a device. In hard, soft, hard-soft mapping solutions are proposed to obtain a representation of the measured beam RSRP.

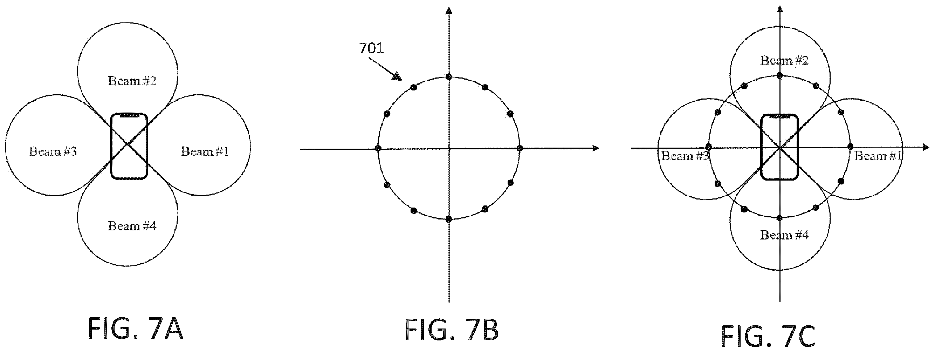

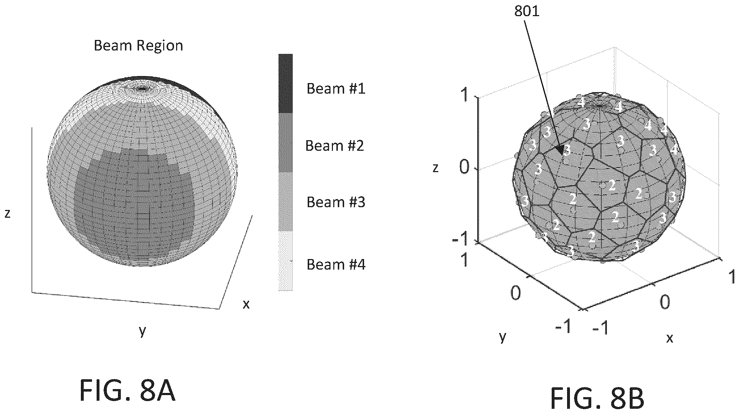

FIGS. 7A-7C and 8A and 8B show examples of UE beam codebooks in 2D and 3D, definition of the direction grids.

FIG. 7A shows a UE beam codebook with four beams (i.e. beam #1, beam #2, beam #3, beam #4) in 2-dimensions. FIG. 7B shows the discretized direction space with 12 segments 701 in the UE. FIG. 7C shows each beam represented by a set of directions in the direction grid.

FIG. 8A shows beam-direction conversion in 3-dimensions (3D) for a beam region of a UE codebook with four beams in 3D. FIG. 8B shows mapping the UE beams to the 3D in the direction grid G. The number close to each point 801 shows the index of the beam that is mapped to.

An example mapping procedure is as follow:

- Define a direction grid set G with K elements, i.e., G = $\{\zeta_1, \zeta_2, \dots, \zeta_K\}$.
- Map each beam in the codebook to, at least, a direction in G. The mapping is done based on the antenna gain of the beams at the directions defined in the direction grid G. For example, beam #n is connected to a direction #k, if and only if, beam #n provides the highest gain (among all the beams in the UE codebook) at direction #k. In an embodiment, the mapping between a beam and a direction can be represented with a binary value ( $I_{k,n}^{G} = 1$ when they are connected, otherwise $I_{k,n}^{G} = 0$ ).

The RSRP measurement information is defined as $R_n^{CB}$ $(n = 1, \dots, N)$ for an $n^{\text{th}}$ measurement of RSRP, is transformed (i.e. mapped) to $R_{k,n}^{G}, k = 1, \dots, K$ in the direction space. For example, $R_{k,n}^{G} = I_{k,n}^{G} \alpha_{k,n}^{G} R_n^{CB}$, where $\alpha_{k,n}^{G}$ is the normalization factor for the mapped directions to the $n^{\text{th}}$ beam. One choice is to consider $\alpha_{k,n}^{G} = 1$ , $\forall$ k, n.

Alternatively, $\alpha_{k,n}^{G}$ can be set to $\alpha_{k,n}^{G} = 1 \big/ \sum_{k=1}^{K} I_{k,n}^{G}$ , $\forall$ k, n.

$$\alpha_{k,n}^{G} = \begin{cases} 1 \big/ \sum_{k=1}^{K} I_{k,n}^{G} \ , \ if \ I_{k,n}^{G} = 1 \\ 0 \ , \ if \ I_{k,n}^{G} = 0 \end{cases} . \tag{3}$$

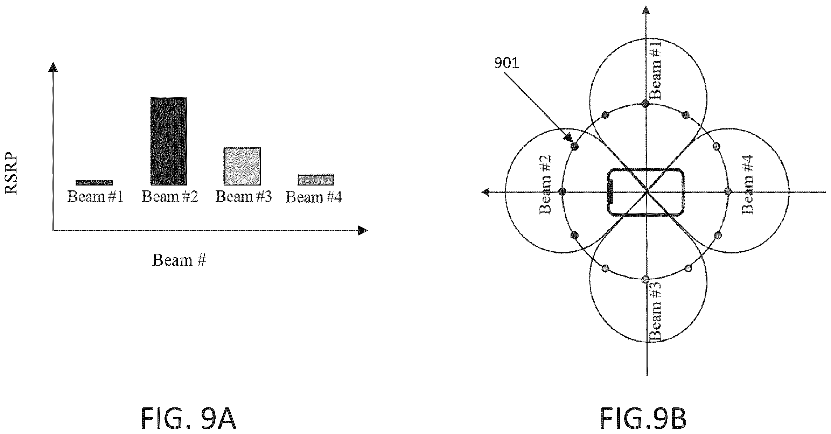

FIG. 9 shows an example of RSRP measurements $R_n^{CB}$ with $N = 4$ beams in the UE beam codebook. As show in FIG. 9A the highest RSRP is measured by beam #2 and the lowest RSRP is measured by beam #1. In the current solutions, device orientation during measurement time ($O^{(1)}, O^{(2)}, O^{(3)}, O^{(4)}$) is not taken into account in the beam alignment procedure. So, for this example, beam #2 is selected as the optimal beam for communication. However, in our proposed framework, the RSRP measurements can be refined using the device orientation during measurement time ($O^{(1)}, O^{(2)}, O^{(3)}, O^{(4)}$) and a decisioning time ($O^{(D)}$). Each beam measurement is mapped to a representation in the direction space. The points 901 in FIG.9B illustrates the representations $R_{k,n}^{G}$ for n = 1,...,N.

Refinement of the RSRP value by rotation

The sixth operation 606 of method 600 comprises calculating a rotation angle of the apparatus. The rotation angle is calculated as a distance between the first orientation and the second orientation. The seventh operation 607 of method 600 comprises rotating the representation of the RSRP value by the rotation angle to produce a refined RSRP value.

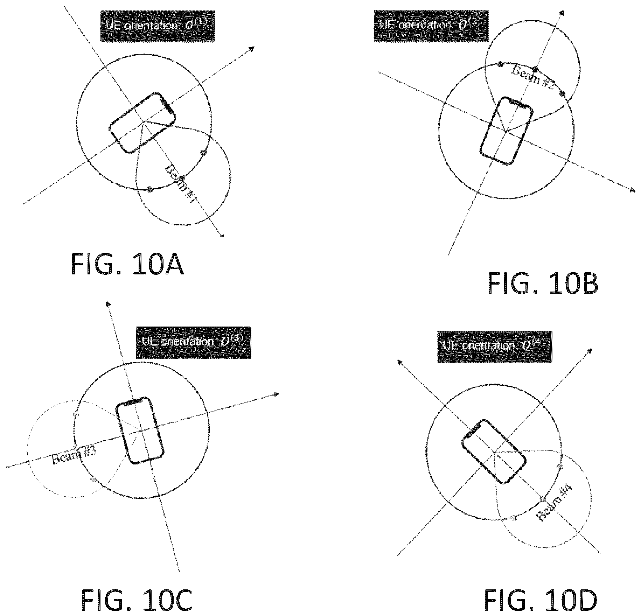

The representations in the mapped into the directional space are refined based on the device orientation during the measurement time. As an example, the refinement can be done by rotating the directions of the mapped representations based on the corresponding device orientation. FIGS. 10A-D show an example of the refined RSRP values for the four beams previously shown in FIGS. 9A and 9B. The RSRP values are based on the device orientation at the measurement time. In other words, the refined RSRP values are based on the device orientation at the first time instance $O^{(n)}$ and at the second time instance $O^{(D)}$. The 3D rotation angles ($\alpha^{(n)}$, $\beta^{(n)}$, $\gamma^{(n)}$) can be obtained to represent the device rotation between these two measurement times. The 3D rotation angles may correspond to a calculated distance between the first orientation and the second orientation.

The k-th direction in the grid G can be represented with vector $\zeta_k$ (as the Cartesian coordinates of the corresponding point on the unit sphere). Considering the rotated k-th direction as $\psi_k$, the refined RSRP values, $R(\alpha, \beta, \gamma)$, can be considered as:

$$R(\alpha,\beta,\gamma) = R_Z(\alpha)R_Y(\beta)R_X(\gamma) = \begin{pmatrix} +\cos\alpha & -\sin\alpha & 0 \\ +\sin\alpha & +\cos\alpha & 0 \\ 0 & 0 & 1 \end{pmatrix} \begin{pmatrix} +\cos\beta & 0 & +\sin\beta \\ 0 & 1 & 0 \\ -\sin\beta & 0 & +\cos\beta \end{pmatrix} \begin{pmatrix} 1 & 0 & 0 \\ 0 & +\cos\gamma & -\sin\gamma \\ 0 & +\sin\gamma & +\cos\gamma \end{pmatrix}$$

$$\psi_k^{(n)} = R(\alpha^{(n)}, \beta^{(n)}, \gamma^{(n)})^{-1} \zeta_k$$

Thus, after the rotation procedure, the direction grid G = {$\zeta_1$, $\zeta_2$, ... , $\zeta_K$} is transformed to $\mathcal{Z}^{(n)} = \left\{ \boldsymbol{\psi}_1^{(n)}, \boldsymbol{\psi}_2^{(n)}, ..., \boldsymbol{\psi}_K^{(n)} \right\}$. However, the power strength assigned to the k-th direction in G is transferred without any modification to the k-th direction in the grid $\mathcal{Z}^{(n)}$, i.e., $R_{k,n}^{\mathcal{Z}^{(n)}} = R_{k,n}^{\mathrm{G}} \quad \forall\, k, n$.

The above example is shown using 3D Cartesian coordinates, however, other known coordinate systems may also be used and a similar procedure applied. For example, cylindrical and spherical coordinate systems may also be used.

FIGS. 10A-D show this refinement applied separately to each of beam #1, beam #2, beam #3, beam #4. The power of each of beam #1 to beam #4 is a shown in FIGS. 9A. Thereby the measured RSRP of beam #2 is the highest measured RSRP among the four measured RSRPs.

Aggregation

The method 600 optionally comprises obtaining a plurality of refined RSRP values for a plurality of reference signals and combining the plurality of refined RSRP values to produce an aggregated representation in the directional space.

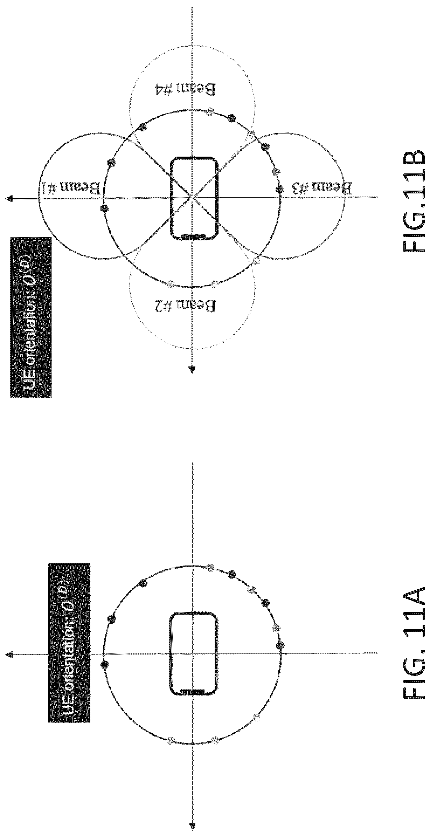

As such, after refining all the triggered representations, the refined RSRP values need to be combined in an aggregated representation. FIG. 11A shows a simple aggregation method by merging all the refined RSRP values in a single representation. FIG. 11A shows a summation of the individual refined RSRP values shown in FIG. 10A-D.

In some scenarios, the refined RSRP values may not be aligned with the quantized directions in the direction grid. It is optional to quantize/transform the aggregated representation to a new representation aligned with a desired direction grid $\mathcal{F}$ with Q directions ($|\mathcal{F}|$ =Q). For example, $R_{k,n}^{\mathcal{Z}^{(n)}}$ can be mapped to the nearest direction in the direction grid $\mathcal{F}$ as $R_{q,n}^{\mathcal{F}}\ q = 1, ..., Q$. Then, the aggregated measurement representation can be obtained as $R_q^{\mathcal{F}} = \sum_{n=1}^{N} R_{q,n}^{\mathcal{F}}$. The benefit of this approach is to ease the aggregation process.

Determine optimum UE beam

The method 600 optionally comprises determining an optimum user equipment, UE, beam from the aggregated representation. The optimum UE beam may be determined based on a strength associated with the aggregated representation in the directional space.

Based on the aggregated representation and the beam pattern of the UE beams, the UE can assign and/or grant a value to RSRP of a beam. As an example, RSRP of a beam can be granted based on the average strength of RSRP values in each of the directions placed in the corresponding beam region as shown in FIG. 11B. By way of example, the aggregated representations promote the selection of the optimum UE beam as beam #1 instead of beam #2. Even though beam #2 provided the highest RSRP during beam sweeping, but because the device is rotated, beam #1 should be used.

A wireless communication session can be commenced with the network node, based on a selected optimum UE beam.

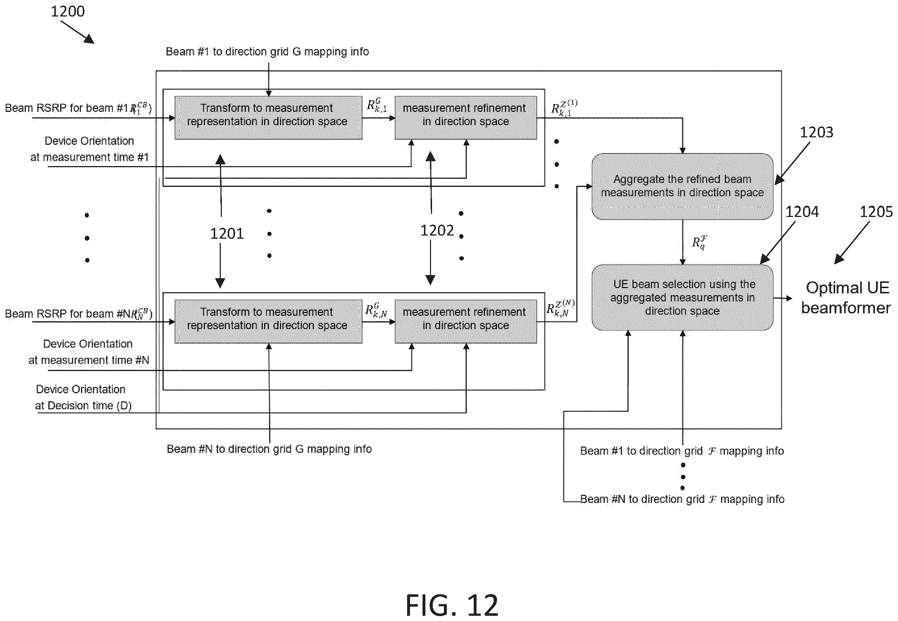

FIG. 12 shows a block diagram of the process discussed herein for determining an optimum UE beam. At step 1201 RSRPs value are mapped (i.e. transformed) to a representations of the RSRP values in a directional space. At step 1202 refined RSRP values are determined by rotation based on a difference between apparatus orientation at different times. At step 1203 the plurality of refined RSRP values are aggregated to produce an aggregated representation in the directional space. At step 1204 an optimum UE beam is determined from the aggregated representation based on a strength associated with the aggregated representation in the directional space. At step 1205 an optimal UE beamformer is output.

Example Apparatus

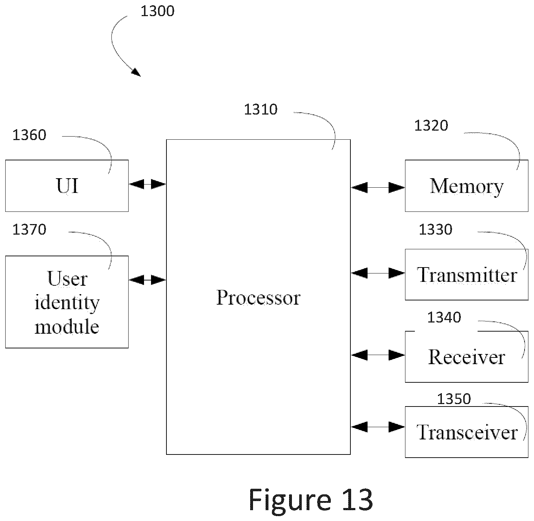

FIG. 13 shows, by way of example, a block diagram of an apparatus capable of performing the method(s) as disclosed herein. Illustrated is device 1300, which may comprise, for example, a mobile communication device such as mobile 100 of FIG. 1. Comprised in device 1300 is processor 1310, which may comprise, for example, a single- or multi-core processor wherein a single-core processor comprises one processing core and a multi-core processor comprises more than one processing core. Processor 1310 may comprise, in general, a control device. Processor 1310 may comprise more than one processor. Processor 1310 may be a control device. A processing core may comprise, for example, a Cortex-A8 processing core manufactured by ARM Holdings or a Steamroller processing core designed by Advanced Micro Devices Corporation. Processor 1310 may comprise at least one Qualcomm Snapdragon and/or Intel Atom processor. Processor 1310 may comprise at least one application-specific integrated circuit, ASIC. Processor 1310 may comprise at least one field-programmable gate array, FPGA. Processor 1310 may be means for performing method steps in device 1300. Processor 1310 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 1300 may comprise memory 1320. Memory 1320 may comprise random-access memory and/or permanent memory. Memory 1320 may comprise at least one RAM chip. Memory 1320 may comprise solid-state, magnetic, optical and/or holographic memory, for example. Memory 1320 may be at least in part accessible to processor 1310. Memory 1320 may be at least in part comprised in processor 1310. Memory 1320 may be means for storing information. Memory 1320 may comprise computer instructions that processor 1310 is configured to execute. When computer instructions configured to cause processor 1310 to perform certain actions are stored in memory 1320, and device 1300 overall is configured to run under the direction of processor 1310 using computer instructions from memory 1320, processor 1310 and/or its at least one processing core may be considered to be configured to perform said certain actions. Memory 1320 may be at least in part external to device 1300 but accessible to device 1300.

Device 1300 may comprise a transmitter 1330. Device 1300 may comprise a receiver 1340. Transmitter 1330 and receiver 1340 may be configured to transmit and receive, respectively, information in accordance with at least one cellular or non-cellular standard. Transmitter 1330 may comprise more than one transmitter. Receiver 1340 may comprise more than one receiver. Transmitter 1330 and/or receiver 1340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 1300 may comprise a near-field communication, NFC, transceiver 1350. NFC transceiver 1350 may support at least one NFC technology, such as NFC, Bluetooth, Wibree or similar technologies.

Device 1300 may comprise user interface, UI, 1360. UI 1360 may comprise at least one of a display, a keyboard, a touchscreen, a vibrator arranged to signal to a user by causing device 1300 to vibrate, a speaker and a microphone. A user may be able to operate device 1300 via UI 1360, for example to accept incoming telephone calls, to originate telephone calls or video calls, to browse the Internet, to manage digital files stored in memory 1320 or on a cloud accessible via transmitter 1330 and receiver 1340, or via NFC transceiver 1350, and/or to play games.

Device 1300 may comprise or be arranged to accept a user identity module 1370. User identity module 1370 may comprise, for example, a subscriber identity module, SIM, card installable in device 1300. A user identity module 1370 may comprise information identifying a subscription of a user of device 1300. A user identity module 1370 may comprise cryptographic information usable to verify the identity of a user of device 1300 and/or to facilitate encryption of communicated information and billing of the user of device 1300 for communication effected via device 1300.

Processor 1310 may be furnished with a transmitter arranged to output information from processor 1310, via electrical leads internal to device 1300, to other devices comprised in device 1300. Such a transmitter may comprise a serial bus transmitter arranged to, for example, output information via at least one electrical lead to memory 1320 for storage therein. Alternatively to a serial bus, the transmitter may comprise a parallel bus transmitter. Likewise processor 1310 may comprise a receiver arranged to receive information in processor 1310, via electrical leads internal to device 1300, from other devices comprised in device 1300. Such a receiver may comprise a serial bus receiver arranged to, for example, receive information via at least one electrical lead from receiver 1340 for processing in processor 1310. Alternatively to a serial bus, the receiver may comprise a parallel bus receiver.

Processor 1310, memory 1320, transmitter 1330, receiver 1340, NFC transceiver 1350, UI 1360 and/or user identity module 1370 may be interconnected by electrical leads internal to device 1300 in a multitude of different ways. For example, each of the aforementioned devices may be separately connected to a master bus internal to device 1300, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

**Claims**

1. An apparatus, comprising:

     means for determining a first orientation of the apparatus at a first time instance;
     means for receiving, at substantially the first time instance, a reference signal from a network node;
     means for determining a reference signal received power, RSRP, value of the reference signal;
     means for determining a second orientation of the apparatus at a second time instance, wherein the second time instance is later than the first time instance;
     means for determining a difference metric between the first orientation and second orientation; and
     means for, upon determining that the difference metric is greater than a predetermined threshold value, processing the RSRP value, based on the difference metric, to provide a refined RSRP value.

2. The apparatus of claim 1, further comprising:
     means for commencing a wireless communication session with the network node, based on the refined RSRP value.

3. The apparatus of any preceding claim, further comprising:
     means for determining that a rotation of the apparatus has occurred.

4. The apparatus of any preceding claim, wherein the first orientation and second orientation are determined per a synchronization signal block, SSB, measurement or a synchronisation signal burst, SS-burst, time instance.

5. The apparatus of any preceding claim, wherein the difference metric comprises a distance between the first orientation and the second orientation.

6. The apparatus of claim 5, wherein the difference metric comprises a factor to account for angle wrapping at a coordinate system used to calculate the distance.

7. The apparatus of any preceding claim, further comprising:
     means for mapping the RSRP value to a representation of the RSRP value in a directional space.

8. The apparatus of claim 7, further comprising:

     means for calculating a rotation angle of the apparatus, wherein the rotation angle is calculated as a distance between the first orientation and the second orientation;
     means for rotating the representation of the RSRP value by the rotation angle to produce a refined RSRP value.

9. The apparatus of claim 8, further comprising:

means for obtaining a plurality of refined RSRP values for a plurality of reference signals;
means for combining the plurality of refined RSRP values to produce an aggregated representation in the directional space.

10. The apparatus of claim 9, further comprising:
means for determining an optimum user equipment, UE, beam from the aggregated representation, wherein the optimum UE beam is determined based on a strength associated with the aggregated representation in the directional space.

11. The apparatus of claim 10, further comprising:
means for commencing a wireless communication session with the network node, based on the optimum UE beam.

12. The apparatus of any preceding claim, wherein the apparatus comprises a user equipment, UE.

13. An apparatus, comprising:

means for determining a first orientation of the apparatus at a first time instance;
means for receiving, at substantially the first time instance, a reference signal from a network node;
means for determining a reference signal received power, RSRP, value of the reference signal;
means for determining a second orientation of the apparatus at a second time instance, wherein the second time instance is later than the first time instance;
means for mapping the RSRP value to a representation of the RSRP value in a directional space;
means for calculating a rotation angle of the apparatus, wherein the rotation angle is calculated as a distance between the first orientation and the second orientation;
means for rotating the representation of the RSRP value by the rotation angle to produce a refined RSRP value.

14. The apparatus of claim 13, further comprising:

means for obtaining a plurality of refined RSRP values for a plurality of reference signals;
means for combining the plurality of refined RSRP values to produce an aggregated representation in the directional space.

15. The apparatus of claim 14, further comprising:
means for determining an optimum user equipment, UE, beam from the aggregated representation, wherein the optimum UE beam is determined based on a strength associated with the aggregated representation in the directional space.

16. A method, comprising:

determining a first orientation of an apparatus at a first time instance;
receiving, at substantially the first time instance, a reference signal from a network node;
determining a reference signal received power, RSRP, of the reference signal;
determining a second orientation of the apparatus at a second time instance, wherein the second time instance is later than the first time instance;
determining a difference metric between the first orientation and second orientation; and

upon determining that the difference metric is greater than a predetermined threshold value, processing the RSRP, based on the difference metric, to provide a refined RSRP.

17. A method, comprising:

determining a first orientation of an apparatus at a first time instance;
receiving, at substantially the first time instance, a reference signal from a network node;
determining a reference signal received power, RSRP, value of the reference signal;
determining a second orientation of the apparatus at a second time instance, wherein the second time instance is later than the first time instance;
mapping the RSRP value to a representation of the RSRP value in a directional space;
calculating a rotation angle of the apparatus, wherein the rotation angle is calculated as a distance between the first orientation and the second orientation;
rotating the representation of the RSRP value by the rotation angle to produce a refined RSRP value.

FIG. 1

FIG. 2

FIG. 3

400

401 — DETERMINING A FIRST ORIENTATION OF THE APPARATUS AT A FIRST TIME INSTANCE

402 — RECEIVING, AT SUBSTANTIALLY THE FIRST TIME INSTANCE, A REFERENCE SIGNAL FROM A NETWORK NODE

403 — DETERMINING A REFERENCE SIGNAL RECEIVED POWER, RSRP, OF THE REFERENCE SIGNAL

404 — DETERMINING A SECOND ORIENTATION OF THE APPARATUS AT A SECOND TIME INSTANCE, WHEREIN THE SECOND TIME INSTANCE IS LATER THAN THE FIRST TIME INSTANCE

405 — DETERMINING A DIFFERENCE METRIC BETWEEN THE FIRST ORIENTATION AND SECOND ORIENTATION

406 — UPON DETERMINING THAT THE DIFFERENCE METRIC IS GREATER THAN A PREDETERMINED THRESHOLD VALUE, PROCESSING THE RSRP, BASED ON THE DIFFERENCE METRIC, TO PROVIDE A REFINED RSRP

FIG. 4

FIG. 5

600

601 — DETERMINING A FIRST ORIENTATION OF AN APPARATUS AT A FIRST TIME INSTANCE

602 — RECEIVING, AT SUBSTANTIALLY THE FIRST TIME INSTANCE, A REFERENCE SIGNAL FROM A NETWORK NODE

603 — DETERMINING A REFERENCE SIGNAL RECEIVED POWER, RSRP, OF THE REFERENCE SIGNAL

604 — DETERMINING A SECOND ORIENTATION OF THE APPARATUS AT A SECOND TIME INSTANCE, WHEREIN THE SECOND TIME INSTANCE IS LATER THAN THE FIRST TIME INSTANCE

605 — MAPPING THE RSRP VALUE TO A REPRESENTATION OF THE RSRP VALUE IN A DIRECTIONAL SPACE

606 — CALCULATING A ROTATION ANGLE OF THE APPARATUS, WHEREIN THE ROTATION ANGLE IS CALCULATED AS A DISTANCE BETWEEN THE FIRST ORIENTATION AND THE SECOND ORIENTATION

607 — ROTATING THE REPRESENTATION OF THE RSRP VALUE BY THE ROTATION ANGLE TO PRODUCE A REFINED RSRP VALUE.

FIG. 6

FIG. 7A

FIG. 7B

FIG. 7C

FIG. 8A

FIG. 8B

EP 4 564 700 A1

FIG.9B

FIG. 9A

FIG. 10A

UE orientation: $O^{(1)}$

Beam #1

FIG. 10B

UE orientation: $O^{(2)}$

Beam #2

FIG. 10C

UE orientation: $O^{(3)}$

Beam #3

FIG. 10D

UE orientation: $O^{(4)}$

Beam #4

EP 4 564 700 A1

FIG. 11A

FIG.11B

1200

Beam #1 to direction grid G mapping info

Beam RSRP for beam #1 $R_1^{CB}$ )

Transform to measurement representation in direction space

$R_{k,1}^G$

measurement refinement in direction space

$R_{k,1}^{Z(1)}$

Device Orientation at measurement time #1

1201

1202

1203

Aggregate the refined beam measurements in direction space

$R_q^F$

1204

1205

Beam RSRP for beam #N $R_N^{CB}$ )

Transform to measurement representation in direction space

$R_{k,N}^G$

measurement refinement in direction space

$R_{k,N}^{Z(N)}$

Device Orientation at measurement time #N

Device Orientation at Decision time (D)

UE beam selection using the aggregated measurements in direction space

Optimal UE beamformer

Beam #N to direction grid G mapping info

Beam #1 to direction grid $\mathcal{F}$ mapping info

Beam #N to direction grid $\mathcal{F}$ mapping info

FIG. 12

Figure 13

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2023/042556 A1 (ALAMMOURI AHMAD [US] ET AL) 9 February 2023 (2023-02-09)<br>* paragraph [0073] - paragraph [0088] *<br>* paragraph [0120] *<br>* figures 3, 6, 7 *<br>- - - - - | 1-6,12, 16<br>7-11, 13-15,17 | INV.<br>H04B7/06<br>H04B17/318<br><br>ADD.<br>H04B7/0404 |

**TECHNICAL FIELDS SEARCHED (IPC)**

H04B

The present search report has been drawn up for all claims

| Place of search | Date of completion of the search | Examiner |
|---|---|---|
| Munich | 24 February 2025 | Toumpakaris, D |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 24 20 0247

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2025

| Patent document cited in search report | Publication date | Patent family member(s) | | Publication date |
|---|---|---|---|---|
| US 2023042556 A1 | 09-02-2023 | EP | 4285502 A1 | 06-12-2023 |
| | | US | 2023042556 A1 | 09-02-2023 |
| | | WO | 2023013854 A1 | 09-02-2023 |

EPO FORM P0459

For more details about this annex : see Official Journal of the European Patent Office, No. 12/82